# EUROPÄISCHE PATENTSCHRIFT

(11) **EP 1 362 165 B1**
(45) Veröffentlichungstag und Bekanntmachung des Hinweises auf die Patenterteilung: **02.08.2006**
(21) Anmeldenummer: 02712736.4
(22) Anmeldetag: 01.02.2002
(51) Int. Cl.: F01N 3/20, B01D 53/94, B01D 53/86, B01D 53/90, F01N 3/027

(54) **VORRICHTUNG UND VERFAHREN ZUR NACHMOTORISCHEN EINBRINGUNG EINES HILFSMITTELS IN EINEN ABGASSTROM**
DEVICE AND METHOD FOR POST-ENGINE INTRODUCTION OF AN AUXILIARY AGENT IN AN EXHAUST GAS STREAM
DISPOSITIF ET PROCEDE PERMETTANT L'INTRODUCTION EN AVAL D'UN MOTEUR D'UN AGENT AUXILIAIRE DANS UN COURANT DE GAZ D'ECHAPPEMENT

(30) Priorität: 13.02.2001 DE 10106503
(43) Veröffentlichungstag der Anmeldung: 19.11.2003
(73) Patentinhaber: ROBERT BOSCH GMBH, 70442 Stuttgart (DE)
(72) Erfinder: BRENNER, Frank, 71686 Remseck (DE); SCHALLER, Johannes, 71229 Leonberg (DE); BAREIS, Marc, 71706 Markgroeningen (DE)
(86) Internationale Anmeldenummer: PCT/DE2002/000370
(87) Internationale Veröffentlichungsnummer: WO 2002/064954

(56) Entgegenhaltungen:
- WO-A-01/00310
- DE-A- 19 510 804
- DE-A- 19 820 682
- US-A- 5 771 689
- US-B1- 6 176 078

## Beschreibung

### Stand der Technik

Die Erfindung geht aus von einer Vorrichtung nach der Gattung des Hauptanspruchs. Aus der deutschen Patentanmeldung mit dem Aktenzeichen P 44 36 415.6 ist bereits eine Vorrichtung bekannt, bei der eine Glühstiftkerze zur Zuführung von Kraftstoff in den Abgastrakt in verdampfter Form eingesetzt wird.

### Vorteile der Erfindung

Die erfindungsgemäße Vorrichtung beziehungsweise das , erfindungsgemäße Verfahren mit den kennzeichnenden Merkmalen der unabhängigen Ansprüche haben demgegenüber den Vorteil, dass eine Auskondensation eines bereits verdampften Kraftstoffs in einer nachfolgend angeordneten Nachbehandlungsanordnung verhindert werden kann, so dass die Funktion beispielsweise eines Katalysators nicht negativ beeinträchtigt wird. Die partielle Oxidation des eingebrachten Hilfsmittels hebt in vorteilhafter Weise zum einen die Katalysatortemperatur an, beispielsweise über die Kondensationstemperatur des Hilfsmittels. Zum anderen haben die teiloxidierten Hilfsmittelmoleküle einen niedrigeren Taupunkt, so dass durch die partielle Oxidation die Kondensation reduziert wird, auch wenn die Abgastemperatur nur geringfügig erhöht wird. Eine Kondensation von beispielsweise CO ist unter realistischen Bedingungen ausgeschlossen.

Durch die in den abhängigen Ansprüchen aufgeführten Maßnahmen sind vorteilhafte Weiterbildungen und Verbesserungen der in den unabhängigen Ansprüchen angegebenen Vorrichtungen beziehungsweise Verfahren möglich.

Mittel zur Gasführung ermöglichen in vorteilhafter Weise eine platzsparende und effektive Anordnung zur Zufuhr und Oxidation mittels einer Gasentladung.

Vorteilhaft ist es insbesondere, den Bereich zwischen den Mitteln zur Zufuhr und den Mitteln zur Anregung einer Gasentladung derart aufzuteilen, dass sich das Hilfsmittel zunächst mit einem Teil des strömenden Abgases vermischen kann, so dass einerseits bei hinreichender Wärmezufuhr bereits vor dem Bereich der Gasentladung eine partielle Oxidation stattfinden kann und andererseits das Hilfsmittel mit dem Abgas bereits so gut durchmischt ist, dass im Bereich der Gasentladung sofort eine weitere Oxidation einsetzen kann.

Ein Vorsehen einer zweiten Öffnung dient in vorteilhafter Weise zur weiteren Zufuhr von Sauerstoff und zur Unterstützung eines zügigen Weitertransports des mit Radikalen angereicherten Abgas-Kraftstoffgemischs in Richtung Nachbehandlungsanordnung.

Als Mittel zur Anregung einer Gasentladung kann in einfacher Weise eine bereits seit langem bekannte Zündkerze eingesetzt werden, die in räumlicher Nähe zu den Mitteln zur Zufuhr des Hilfsmittels angeordnet ist, so dass eine effektive Anreicherung des Abgas-Kraftstoff-Gemischs mit Radikalen erfolgen kann.

Weitere Vorteile ergeben sich aus den weiteren in den abhängigen Ansprüchen und in der Beschreibung genannten Merkmalen.

### Zeichnung

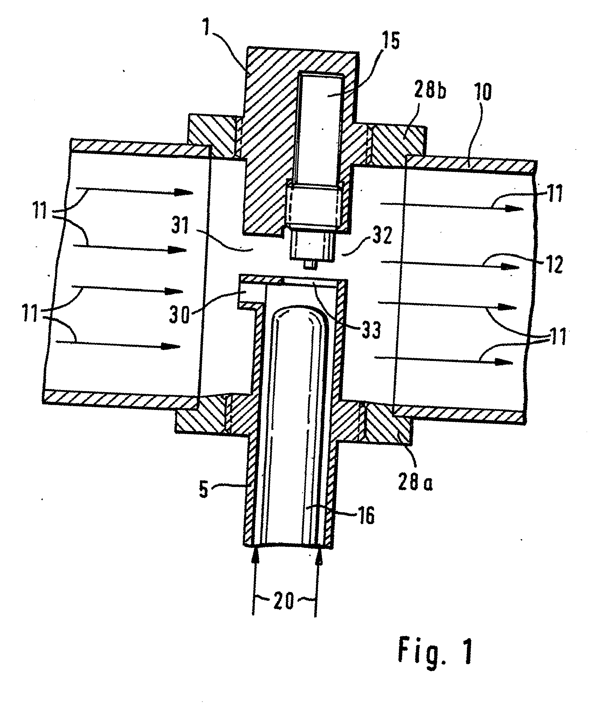

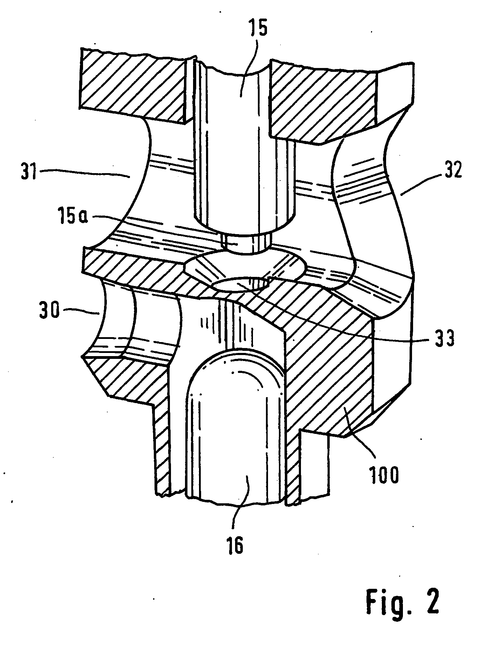

Ausführungsbeispiele der Erfindung sind in der Zeichnung dargestellt und in der nachfolgenden Beschreibung näher erläutert. Es zeigen Figur 1 eine Querschnittsseitenansicht einer Vorrichtung zur nachmotorischen Einbringung eines Hilfsmittels und Figur 2 eine perspektivische Schnittarisicht eines Ausschnitts der Vorrichtung.

### Beschreibung der Ausführungsbeispiele

Figur 1 zeigt eine Vorrichtung 1 zur nachmotorischen Einbringung eines Hilfsmittels in den Abgasstrom 11 einer Brennkraftmaschine. Die Vorrichtung ist über Einschraubmuffen 28a beziehungsweise 28b am Auspuffrohr, 10 befestigt. Die Befestigung schließt das Auspuffrohr gasdicht ab, und das Abgas 11 kann die Vorrichtung umströmen, da diese nicht den gesamten Querschnitt des Auspuffrohrs einnimmt. Die Vorrichtung 1 weist einen zylindrischen Körper 5 zur Kraftstoffzufuhr 20 in den Abgastrakt auf. Der zylindrische Körper 5 enthält in seinem Innenraum einen elektrisch beheizbaren Glühstift 16. Der zylindrische Körper 5 weist an seinem in den Abgasstrom ragenden Ende eine Öffnung 30 auf, deren Querschnitt in etwa senkrecht zur Strömungsrichtung des Abgases 11 angeordnet ist. Des Weiteren ist eine senkrecht zur Öffnung 30 stehende kreisförmige Durchgangsöffnung 33 im zylindrischen Körper eingebracht, die eine Verbindung zu einem aus einer zweiten Öffnung einer 31 und einer dritten Öffnung 32 gebildeten Durchgangskanal herstellt. In den Durchgangskanal ragt oberhalb der Durchgangsöffnung 33 eine elektrisch betreibbare Zündkerze 15 hinein. Stromabwärts der Vorrichtung enthält der Abgasstrom mit Radikalen und/oder mit teiloxidierten Kraftstoffmolekülen versetzte Abgasanteile 12.

Das aus einer Brennkraftmaschine stammende Abgas 11 trifft auf die Vorrichtung 1 und umströmt diese teilweise. Durch die Öffnungen 30 beziehungsweise 31 gelangt jedoch auch Abgas durch die Vorrichtung hindurch auf die andere Seite der Vorrichtung hin zur nachgeordneten Abgasnachbehandlungsanordnung, beispielsweise eines Reduktionskatalysators zur NOX-Reduktion oder eines Partikelfilters. Über nicht näher dargestellte Heizmittel wird vorerhitzter Kraftstoff 20 in den Ringspalt um die Glühstiftkerze 16 eingeführt. Der Kraftstoff verdampft und wird im Bereich zwischen der Öffnung 30 und der Durchgangsöffnung 33 mit in die Öffnung 30 einströmendem Abgas vermischt. An der heißen Spitze der Glühstiftkerze findet bereits eine partielle Oxidation des Kraftstoffs statt. Das Gemisch strömt weiter durch die Durchgangsöffnung 33. Zwischen dieser Öffnung und der Spitze der Zündkerze 15 brennt ein Lichtbogen. Dieser Lichtbogen bildet reaktionsfreudige Radikale und erhöht die Enthalpie des Gemischs. Durch die Öffnung 31 gelangt mit dem Abgas weiterer Sauerstoff in diese zweite Reaktionszone, so dass der Kraftstoff stromabwärts der Zündkerze 15 nach Passieren der Öffnung 32 weiter oxidiert.

In Figur 2 ist ein Ausschnitt 100 der Vorrichtung 1 in perspektivischer Schnittansicht dargestellt. Die Vorrichtung ist als monolithischer Metallblock ausgeführt, in dem die Öffnungen 30, 31, 32 und 33 als Bohrungen in diesem Block ausgebildet sind. Die Bohrungen sind zylindrisch, wobei die Öffnung 32 an ihrem Ende ebenso wie die Öffnung 30 einen konisch geformten Übergangsbereich aufweist. Der Keramikkörper der Zündkerze 15 isoliert die Spitze 15a der Zündkerze elektrisch vom Metallblock.

Wird die Zündkerze 15 elektrisch mit der erforderlichen Zündspannung angesteuert, wird zwischen der Spitze 15a der Zündkerze und der Durchgangsöffnung 33 eine Gasentladung angeregt. Das von der Glühstiftkerze 16 durch die Durchgangsöffnung 33 tretende Kraftstoff-Abgas-Gemisch wird über die Durchgangsöffnung 31 zusätzlich mit im Abgas vorhandenen Sauerstoff angereichert und im brennenden Lichtbogen zur Bildung reaktionsfreudiger Radikale angeregt. Das mit Radikalen versetzte Gemisch verläßt die Vorrichtung durch die Öffnung 32 und oxidiert weiter, so dass eine nachgeordnete Nachbehandlungsanordnung mit erhitzten beziehungsweise sauerstofffreien Abgasen versorgt werden kann.

Die erfindungsgemäße Vorrichtung kann bei verschiedenen Nachbehandlungsanordnungen eingesetzt werden, denn sowohl bei der Regeneration von Speicherkatalysatoren als auch bei der Regeneration von Partikelfiltern ist eine zumindest partielle Oxidation des Kraftstoffs vor dem Abgasnachbehandlungssystem erwünscht. Beim Speicherkatalysator muss aller im Abgas vorhandener Sauerstoff reduziert werden, und beim Partikelfilter führt die Kraftstoffoxidation zu der gewünschten Temperaturerhöhung des Abgases, wie sie für die Partikelfilterregeneration benötigt wird.

In der erfindungsgemäßen Anordnung sind die Mittel zur Kraftstoffzufuhr und die Zündkerze, die den Lichtbogen bildet, auf einer Achse angeordnet, wobei der Kraftstoffdampf in Richtung Zündkerze strömt. In einer alternativen Ausführungsform kann die Zündkerze jedoch relativ zum Abgasstrom 11 auch leicht seitlich oder in Strömungsrichtung versetzt zur Glühstiftkerze 16 angeordnet sein, so lange eine Einbindung des Kraftstoffdampfes in den sich zwischen dem Metallblock und der Zündkerze bildenden Lichtbogen gewährleistet ist, d.h. solange die Mittel zur Zufuhr mit der Zündkerze wechselwirken können in dem Sinne, dass eine zumindest partielle Oxidation des zugeführten Hilfsmittel vor dem Eintreten in die Nachbehandlungsanordnung unterstützt werden kann.

In einer weiteren alternativen Ausführungsform kann der Kraftstoff auch bereits in vorverdampfter Form in den Ringspalt zwischen dem zylindrischen Körper 5 und der Glühstiftkerze 16 eingeführt werden, so dass die Glühstiftkerze lediglich noch dazu dient, wieder bereits auskondensierten Kraftstoff in die Gasphase zu überführen, um sicherzustellen, dass kein Kraftstoff in flüssiger Form beispielsweise in den nachgeordneten Katalysator gelangen beziehungsweise kein Kraftstoff dort auskondensieren kann.

## Patentansprüche

1. Vorrichtung zur nachmotorischen Einbringung eines Hilfsmittels in in eine Nachbehandlungsanordnung, insbesondere in einen Reduktionskatalysator zur NOx-Reduktion oder in ein Partikelfilter, strömende Abgase einer Brennkraftmaschine, mit Mitteln zur Zufuhr des Hilfsmittels, **dadurch gekennzeichnet, dass** mit den Mitteln zur Zufuhr (5, 16, 20) wechselwirkende, Mittel zur Anregung einer Gasentladung (15) vorgesehen sind, so dass eine zumindest partielle Oxidation des zugeführten Hilfsmittels vor dem Eintreten in die Nachbehandlungsanordnung unterstützt werden kann, wobei die Wechselwirkung der Mittel zur Zufuhr (5, 16, 20) und der Mittel zur Anregung einer Gasentladung (15) über Mittel zur Gasführung (30, 31, 33) erfolgt, wobei die Mittel zur Gasführung (30, 31, 33) den Bereich zwischen den Mitteln zur Zufuhr (5, 16, 20) und den Mitteln zur Anregung einer Gasentladung (15) derart aufteilen, dass sich das Hilfsmittel zunächst mit einem Teil des strömenden Abgases vermischen kann, bevor es zu den Mitteln zur Anregung einer Gasentladung gefuhrt wird, wobei die Mittel zur Zufuhr und die Mittel zur Anregung einer Gasentladung relativ zueinander so angeordnet sind, dass die Zufuhr des Hilfsmittels zu den Mitteln zur Anregung einer Gasentladung im Wesentlichen in einer Richtung senkrecht zur Strömungsrichtung des Abgases (11) erfolgen kann, wobei die Mittel zur Gasführung drei Öffnungen aufweisen, wobei eine erste Öffnung (30) einen Teil der strömenden Abgase zu den Mitteln zur Zufuhr leitet, eine zweite Öffnung (31) einen weiteren Teil der strömenden Abgase zu den Mitteln zur Anregung einer Gasentladung leitet und eine dritte Öffnung (32) mit Radikalen versetzte Abgase zu der Nachbehandlungsanordnung abführt.

2. Vorrichtung nach einem der vorhergehenden Ansprüche, **dadurch gekennzeichnet, dass** die Mittel zur Anregung einer Gasentladung Mittel zur Erzeugung eines Lichtbogens umfassen.

3. Vorrichtung nach Anspruch 2, **dadurch gekennzeichnet, dass** die Mittel zur Erzeugung eines Lichtbogens eine Zündkerze (15) umfassen.

4. Vorrichtung nach einem der vorhergehenden Ansprüche, **dadurch gekennzeichnet, dass** die Mittel zur Zufuhr eine Einrichtung zur Überführung des Hilfsmittels in die gasförmige Phase umfassen.

5. Vorrichtung nach Anspruch 4, **dadurch gekennzeichnet, dass** die Einrichtung zur Überführung ein Heizkörper ist.

6. Vorrichtung nach Anspruch 5, **dadurch gekennzeichnet, dass** der Heizkörper ein elektrisch beheizbarer Glühstift (16) ist.

7. Vorrichtung nach einem der Ansprüche 4, 5 oder 6, **dadurch gekennzeichnet, dass** die Einrichtung zur Überführung des Hilfsmittels in die gasförmige Phase ein in den Abgasstrom ragender hohler Körper (5) ist, dessen Innenraum vom Abgasstrom durch eine Wand mit endständiger Öffnung getrennt ist und in dessen Innenraum das Hilfsmittel eingebracht werden kann, wobei die Einrichtung zur Überführung im innenraum angeordnet ist.

8. Vorrichtung nach Anspruch 5 und 7, **dadurch gekennzeichnet, daß** die Innenwand des hohlen Körpers den Heizkörper in geringem Abstand umfaßt.

9. Vorrichtung nach einem der vorhergehenden Ansprüche, **dadurch gekennzeichnet, daß** sie über Einschraubmuffen (28a, 28b) mit einem das strömende Abgas führende Auspuffrohr verbindbar ist.

10. Vorrichtung nach einem der vorhergehenden Ansprüche, **dadurch gekennzeichnet, dass** das Hilfsmittel ein Reduktionsmittel zur Reduktion im Abgas vorhandenen Sauerstoffs ist.

11. Vorrichtung nach einem der vorhergehenden Anspruche, **dadurch gekennzeichnet, dass** das Hilfsmittel ein Kraftstoff, insbesondere ein Dieselkraftstoff, ist.

## Claims

1. Apparatus for the post-engine introduction of an auxiliary agent into exhaust gases from an internal combustion engine flowing into an aftertreatment arrangement, in particular into a reduction catalytic converter for NOx reduction or into a particulate filter, having means for supplying the auxiliary agent, **characterized in that** means for activating a gas discharge (15) which interact with the supply means (5, 16, 20) are provided, so that an at least partial oxidation of the auxiliary agent supplied before it enters the aftertreatment arrangement can be boosted, the interaction between the supply means (5, 16, 20) and the means for activating a gas discharge (15) being effected by gas-guide means (30, 31, 33), the gas-guide means (30, 31, 33) dividing the region between the supply means (5, 16, 20) and the means for activating a gas discharge (15) in such a manner that the auxiliary agent can first of all be mixed with part of the flowing exhaust gas before it is guided to the means for activating a gas discharge, the supply means and the means for activating a gas discharge being arranged in such a way relative to one another that the auxiliary agent can be supplied to the means for activating a gas discharge substantially in a direction which is perpendicular to the direction of flow of the exhaust gas (11), the gas-guide means having three openings, a first opening (30) passing part of the flowing exhaust gases to the supply means, a second opening (31) passing a further part of the flowing exhaust gases to the means for activating a gas discharge, and a third opening (32) discharging exhaust gases laden with free radicals to the aftertreatment arrangement.

2. Apparatus according to one of the preceding claims, **characterized in that** the means for activating a gas discharge comprise means for generating an arc.

3. Apparatus according to Claim 2, **characterized in that** the means for generating an arc comprise a spark plug (15).

4. Apparatus according to one of the preceding claims, **characterized in that** the supply means comprise a device for converting the auxiliary agent into the gas phase.

5. Apparatus according to Claim 4, **characterized in that** the conversion device is a heater.

6. Apparatus according to Claim 5, **characterized in that** the heater is an electrically heatable sheathed element (16).

7. Apparatus according to one of Claims 4, 5 or 6, **characterized in that** the device for converting the auxiliary agent into the gas phase is a hollow body (5) which projects into the exhaust-gas stream, the interior of which is separated from the exhaust-gas stream by a wall with an end opening and into the interior of which the auxiliary agent can be introduced, the conversion device being arranged in the interior.

8. Apparatus according to Claims 5 and 7,
**characterized in that** the inner wall of the hollow body surrounds the heater at a short distance therefrom.

9. Apparatus according to one of the preceding claims, **characterized in that** it can be connected via screw-in sockets (28a, 28b) to an exhaust pipe which carries the flowing exhaust gas.

10. Apparatus according to one of the preceding claims, **characterized in that** the auxiliary agent is a reducing agent for reducing oxygen that is present in the exhaust gas.

11. Apparatus according to one of the preceding claims, **characterized in that** the auxiliary agent is a fuel, in particular a diesel fuel.

## Revendications

1. Dispositif permettant l'introduction en aval d'un moteur d'un agent auxiliaire dans des gaz d'échappement d'un moteur à combustion interne circulant dans un dispositif de post-traitement, en particulier dans un catalyseur de réduction pour la réduction de NOx ou dans un filtre à particules, avec des moyens pour l'introduction de l'agent auxiliaire,
**caractérisé en ce que**
des moyens interagissant avec les moyens d'introduction (5, 16, 20) sont prévus pour l'excitation d'une décharge gazeuse (15), de sorte qu'une oxydation au moins partielle de l'agent auxiliaire introduit puisse être favorisée avant l'entrée dans le dispositif de post-traitement, l'interaction des moyens d'introduction (5, 16, 20) et des moyens d'excitation d'une décharge gazeuse (15) est réalisée par des moyens pour le guidage de gaz (30, 31, 33), les moyens de guidage de gaz (30, 31, 33) divisent la région comprise entre les moyens d'introduction (5, 16, 20) et les moyens d'excitation d'une décharge gazeuse (15) pour que l'agent auxiliaire puisse d'abord se mélanger avec une partie des gaz d'échappement en circulation avant qu'ils ne soient guidés vers les moyens d'excitation d'une décharge gazeuse, les moyens d'introduction et les moyens d'excitation d'une décharge gazeuse sont disposés les uns par rapport aux autres pour que l'introduction de l'agent auxiliaire vers les moyens d'excitation d'une décharge gazeuse soit réalisée sensiblement dans une direction perpendiculaire à la direction de circulation des gaz d'échappement (11), et les moyens de guidage des gaz présentent trois ouvertures, dont une première ouverture (30) conduit une partie des gaz d'échappement en circulation vers les moyens d'introduction, une deuxième ouverture (31) conduit une autre partie des gaz d'échappement en circulation vers les moyens d'excitation d'une décharge gazeuse et une troisième ouverture (32) évacue des gaz d'échappement déplacés avec des radicaux vers le dispositif de post-traitement.

2. Dispositif selon l'une quelconque des revendications précédentes,
**caractérisé en ce que**
les moyens d'excitation d'une décharge gazeuse comprennent des moyens pour produire un arc électrique.

3. Dispositif selon la revendication 2,
**caractérisé en ce que**
les moyens pour produire un arc électrique comprennent une bougie d'allumage (15).

4. Dispositif selon l'une quelconque des revendications précédentes,
**caractérisé en ce que**
les moyens d'introduction comprennent un dispositif pour transformer l'agent auxiliaire en une phase gazeuse.

5. Dispositif selon la revendication 4,
**caractérisé en ce que**
le dispositif de transformation est un corps chauffant.

6. Dispositif selon la revendication 5,
**caractérisé en ce que**
le corps chauffant est un crayon de préchauffage (16) à chauffage électrique.

7. Dispositif selon l'une quelconque des revendications 4, 5 ou 6,
**caractérisé en ce que**
le dispositif pour transformer l'agent auxiliaire en une phase gazeuse est un corps creux (5) pénétrant dans le courant de gaz d'échappement, dont l'espace intérieur est séparé du courant de gaz d'échappement par une paroi avec une ouverture d'extrémité et dans l'espace intérieur duquel l'agent auxiliaire peut être introduit, le dispositif de transformation étant disposé dans l'espace intérieur.

8. Dispositif selon la revendication 5 et 7,
**caractérisé en ce que**
la paroi intérieure du corps creux entoure le corps chauffant à une faible distance.

9. Dispositif selon l'une quelconque des revendications précédentes,
**caractérisé en ce qu'**
il peut être raccordé par des manchons à visser (28a, 28b) à un tuyau d'échappement conduisant les gaz d'échappement en circulation.

10. Dispositif selon l'une quelconque des revendications précédentes,
**caractérisé en ce que**
l'agent auxiliaire est un agent réducteur pour la réduction de l'oxygène présent dans les gaz d'échappement.

11. Dispositif selon l'une quelconque des revendications précédentes,
**caractérisé en ce que**
l'agent auxiliaire est un carburant, en particulier un carburant diesel.
